# EUROPÄISCHE PATENTSCHRIFT

(11) **EP 3 775 128 B1**
(45) Veröffentlichungstag und Bekanntmachung des Hinweises auf die Patenterteilung: **23.03.2022**
(21) Anmeldenummer: 19715071.7
(22) Anmeldetag: 01.04.2019
(51) Int. Cl.: C11D 3/00, C11D 3/37

(54) **TEXTILPFLEGEPRODUKT MIT OPTIONAL VERNETZTEM COPOLYMER UND VERFAHREN ZUR AUSRÜSTUNG VON TEXTILIEN**
TEXTILE CARE PRODUCT HAVING OPTIONALLY CROSS-LINKED COPOLYMER AND METHOD FOR FINISHING TEXTILES
PRODUIT DE SOIN DES TEXTILES COMPRENANT UN COPOLYMÈRE ÉVENTUELLEMENT RÉTICULÉ ET PROCÉDÉ PERMETTANT L'APPRÊT DE TEXTILES

(30) Priorität: 13.04.2018 DE 102018003035
(43) Veröffentlichungstag der Anmeldung: 17.02.2021
(73) Patentinhaber: Henkel AG & Co. KGaA, 40589 Düsseldorf (DE)
(72) Erfinder: BLUHM, Nadine, 40233 Düsseldorf (DE); SCHMIEDEL, Peter, 40591 Düsseldorf (DE); JANSSEN, Frank, 51103 Köln (DE); LOHMEIER, Thomas, 32369 Rahden (DE); WONG, John, 6291 CS Vaals (NL); RICHTERING, Walter, 52074 Aachen (DE)
(86) Internationale Anmeldenummer: PCT/EP2019/058130
(87) Internationale Veröffentlichungsnummer: WO 2019/197185

(56) Entgegenhaltungen:
- EP-A1- 1 972 683

## Beschreibung

Die vorliegende Erfindung betrifft die Verwendung eines Copolymers, das aus N-Isopropylacrylamideinheiten, N-[3-(Dimethylamino)propyl]methacrylamideinheiten und optional mindestens einem Vernetzungsmittel besteht, sowie ein Textilpflegeprodukt, das ein solches Copolymer enthält, zur Verminderung einer Wiederanschmutzung von Textilien oder zur Verbesserung der Entfernung von Anschmutzungen aus Textilien. Darüber hinaus betrifft die Erfindung auch ein Verfahren zur Ausrüstung von Textilien mit einer Soil-Release Schutzschicht und damit ein Verfahren, mit dem eine Wiederanschmutzung von Textilien verringert und/oder eine Entfernbarkeit von Anschmutzungen aus Textilien verbessert werden kann.

Durch den täglichen Gebrauch von Textilien, beispielsweise durch das Tragen von textiler Bekleidung, kommt es unweigerlich zur Verschmutzung der Textilien. Viele Flecken oder Verschmutzungen, die im Folgenden unter dem Begriff "Anschmutzungen" zusammengefasst werden, sind nur sehr schwierig oder mit erheblichem Aufwand rückstandslos aus den Textilien entfernbar. Dies gilt insbesondere für lipophile Produkte, wie zum Beispiel Schmieröle, Motoröle, Fette, Wachse und dergleichen, aber zum Beispiel auch für Pigmente. Zur Verminderung der Verschmutzung von Textilien werden im Stand der Technik so genannte "Soil-Release" Additive vorgeschlagen, die Waschmitteln zugesetzt werden, und während eines Waschvorganges auf die Oberfläche von Textilien aufziehen.

DE 101 52 308 A1 beschreibt zu diesem Zweck die Verwendung von Polymerisaten aus Polyisocyanaten und polymeren Polyolen. Des Weiteren beschreibt DE 10 2007 013 217 A1 anionische Soil-Release-Polyester, die aus Terephthalsäure, Sulfoisophthalsäure, (Poly)alkylenglykol und einer nichtionischen Endgruppe bestehen. Die Verwendung von bei 20 °C wasserlöslichen Polymeren, enthaltend mindestens jeweils ein polymerisiertes Monomer a) H₂C=CR¹-CO-NH-R²-N⁺R³R⁴R⁵ X⁻ wobei R¹ für ein Wasserstoffatom oder einen Alkylrest mit 1 bis 4 C-Atomen steht, R² für einen linearen oder verzweigten Alkylenrest mit 1 bis 12 C-Atomen und R³, R⁴, R⁵ unabhängig voneinander ein Wasserstoffatom, einen Alkylrest mit 1 bis 18 C-Atomen oder einen Phenlyrest bedeuten, und X⁻ für ein Anion aus der Gruppe der Halogene, Sulfate bzw. Alkylsulfate oder Hydroxid, Phosphat, Acetat, Formiat oder Ammonium steht, und b) H₂C=CR⁶-CO-NR⁷R⁸ wobei R⁶ für ein Wasserstoffatom oder einen Alkylrest mit 1 bis 4 C-Atomen steht und R⁷ und R⁸, jeweils unabhängig voneinander für ein Wasserstoffatom, einen Alkylrest mit 1 bis 4 C-Atomen oder einen C3-C6 Cycloalkylrest steht, mit der Maßgabe, dass Rund R⁸ nicht gleichzeitig für ein Wasserstoffatom stehen, und c) Acryl- und/oder Methacrylsäure und/oder d) weitere Monomere aus der Gruppe der C3-C6 einfach ethylenisch ungesättigten Carbonsäuren wie Crotonsäure, Maleinsäure, Maleinsäureanhydrid, Fumarsäure, Itaconsäure, sowie deren Halbester, und Salze, oder H₂C=CR-CO-NH-CR'R"R"'-SO₃H und deren Salze, insbesondere die Alkalimetall- und Ammoniumsalze, wobei R, R', R" und R'" unabhängig voneinander für ein Wasserstoffatom oder einen Alkyl(en)rest mit 1 bis 4 C-Atomen steht, mit der Maßgabe, dass in dem Polymer das Monomere c) in Mengen von höchstens 25 Gew.-% bezogen auf das Polymer enthalten sind, als Soil-release Additive für Waschmittel ist in EP 1 972 683 A1 offenbart.

Die im Stand der Technik bekannten Soil-Release Wirkstoffe zeigen jedoch entweder eine hohe Selektivität für eine bestimmte Anschmutzung, was bedeutet, dass nur eine bestimmte Art von Schmutz, beispielsweise lediglich ölbasierte Anschmutzungen, oder nur Pigmente oder andere hydrophilere Anschmutzungen entfernt werden, oder entfalten ihr Wirkungsspektrum lediglich auf einer bestimmten Sorte von Gewebe, beispielsweise lediglich auf Polyamiden oder auf Baumwolle basierenden Geweben.

Ausgehend von diesem Stand der Technik ist es eine Aufgabe der vorliegenden Erfindung, eine Verwendung eines Copolymers anzugeben, das aus N-Isopropylacrylamideinheiten, N-[3-(Dimethylamino)propyl]methacrylamideinheiten und optional mindestens einem Vernetzungsmittel besteht, sowie ein Textilpflegeprodukt bereitzustellen, das Wiederanschmutzungen von Textilien vorbeugt und/oder vermindert oder die Entfernbarkeit von Anschmutzungen aus den Textilien verbessert. Ferner ist es eine Aufgabe der vorliegenden Erfindung ein Verfahren zur Ausrüstung von Textilien mit einer Soil-Release Schutzschicht anzugeben, durch das Textilien vor Wiederanschmutzungen geschützt werden und/oder auf das Textil aufziehende Anschmutzungen leichter entfernt werden können.

Überraschenderweise wurde gefunden, dass diese Aufgabe durch die Verwendung eines Copolymers, das aus N-Isopropylacrylamideinheiten, N-[3-(Dimethylamino)propyl]methacrylamideinheiten und optional mindestens einem Vernetzungsmittel besteht (kurz: NIPAM-co-DMAPMA), gelöst wird. Die in dem Copolymer enthaltenen N-Isopropylacrylamideinheiten und N-[3-(Dimethylamino)propyl]methacrylamideinheiten werden durch nachfolgende Formeln dargestellt:
N-Isopropylacrylamid (NIPAM): 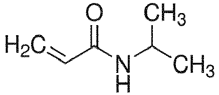
N-[3-(Dimethylamino)propyl]methacrylamid (DMAPMA):

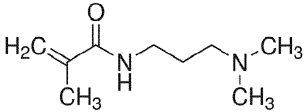

Ohne an die Theorie gebunden zu sein wird angenommen, dass die in dem Copolymer enthaltenen N-Isopropylacrylamideinheiten aufgrund ihrer chemischen Konstitution sehr gut auf unterschiedliche Gewebearten, wie zum Beispiel Cellulose-basierte Gewebe (Baumwolle), Polyamidgewebe, Polyestergewebe, Mischgewebe und dergleichen aufziehen und dort eine Art Schutzschicht oder Schutzfilm bilden, der einen ungehinderten Zugang von Anschmutzungen zu dem oder in das Gewebe verhindert und damit einer Anschmutzung oder Wiederanschmutzung vorbeugt oder eine solche effektiv verringert oder gar verhindert. Ferner wird angenommen, dass die N-[3-(Dimethylamino)propyl]methacrylamideinheiten in dem Copolymer aufgrund des hohen hydrophilen Anteils durch die Methacrylamideinheiten ein Entfernern der Anschmutzungen vom oder aus dem Gewebe erleichtern. Durch den Methacrylamidanteil in den N-[3-(Dimethylamino)propyl]methacrylamideinheiten wird zudem die Filmbildung auf dem Gewebe unterstützt, so dass eine so genannte Soil-Release Schutzschicht gleichförmig auf der Oberfläche des Gewebes ausgebildet werden kann. Hierbei wird eine flächendeckende "Schutzabdeckung" des textilen Gewebes durch die sterisch anspruchsvollen Ketten aus N-Isopropylacrylamideinheiten und N-[3-(Dimethylamino)propyl]methacrylamideinheiten gefördert, so dass ein ungehinderter Zugang von Anschmutzungen zum Gewebe oder in das Gewebe hinein verhindert oder zumindest deutlich reduziert wird.

In Summe zeichnet sich das erfindungsgemäß verwendete Copolymer durch hohe hydrophile aber auch lipophile Anteile aus, so dass zudem Anschmutzungen unterschiedlicher Art, also lipophile Anschmutzungen wie zum Beispiel Fette, Wachse oder Öle, und auch hydrophile Anschmutzungen, wie zum Beispiel Pigmente, Farbstoffe und dergleichen, vermindert oder sogar verhindert oder sehr leicht wieder entfernt werden können.

Das erfindungsgemäß verwendete Copolymer liegt hierbei vorzugsweise in Form eines Hydrogels vor. Unter dem Begriff "Hydrogel" wird im Sinne der Erfindung ein Wasser enthaltendes, aber wasserunlösliches Copolymer verstanden, dessen Moleküle chemisch, zum Beispiel durch kovalente oder ionische Bindungen, oder physikalisch, zum Beispiel durch Schlaufenbildung der Polymerketten, zu einem dreidimensionalen Netzwerk verknüpft sind. Das Hydrogel besitzt hierbei die Eigenschaft, aufgrund der hohen hydrophilen Anteile im Copolymer in Wasser unter beträchtlicher Volumenzunahme zu quellen, ohne den stofflichen Zusammenhalt zu verlieren. Hierdurch kann eine Ablösung und Entfernung von Anschmutzungen erleichtert und damit verbessert werden.

Als Vernetzungsmittel kann jegliches die N-Isopropylacrylamideinheiten und/oder N-[3-(Dimethylamino)propyl]methacrylamideinheiten vernetzende Mittel eingesetzt werden. Vorzugsweise werden Vernetzungsmittel eingesetzt, die die Acrylamideinheiten oder Methacrylateinheiten vernetzen, wie insbesondere N,N'-Methylenbisacrylamid (MBA), das ein symmetrisches, nicht-konjugiertes bifunktionelles Vinyl-Monomer ist.

Im erfindungsgemäß verwendeten Copolymer liegt das Molverhältnis von aus N-Isopropylacrylamid zu aus dem Vernetzungsmittel erhaltenen Einheiten vorzugsweise im Bereich von 1000:1 bis 10:1, insbesondere von 200:1 bis 20:1 und besonders bevorzugt von 50:1 bis 25:1.

Des Weiteren erfindungsgemäß wird auch ein Textilpflegeprodukt offenbart, das mindestens ein Copolymer enthält, das aus N-Isopropylacrylamideinheiten, N-[3-(Dimethylamino)propyl]methacrylamideinheiten und optional mindestens einem Vernetzungsmittel besteht. Dies schließt mit ein, dass das erfindungsgemäße Textilpflegeprodukt ein oder mehrere Copolymere enthält, die aus N-Isopropylacrylamideinheiten, N-[3-(Dimethylamino)propyl]methacrylamideinheiten und optional mindestens einem Vernetzungsmittel bestehen.

Hierbei wird unter "Textilpflegeprodukt" im Sinne der vorliegenden Erfindung jegliches Wasch-, Reinigungs- und Pflegemittel verstanden, das zur Reinigung und Pflege von Textilien, wie Heim- und Bekleidungstextilien, verwendet wird. Hierzu zählen insbesondere Waschmittel, wie Vollwaschmittel, Spezialwaschmittel, wie zum Beispiel Feinwaschmittel, Wollwaschmittel und dergleichen, Waschhilfsmittel, Wäschepflegemittel, Wäschesprays, Bügelhilfsmittel, Wäschevorbehandlungsmittel und Wäschenachbehandlungsmittel.

Zur Vermeidung von Redundanz, wird bezüglich der Definition des aus N-Isopropylacrylamideinheiten, N-[3-(Dimethylamino)propyl]methacrylamideinheiten und optional mindestens einem Vernetzungsmittel bestehenden Copolymers sowie der erfindungsgemäß erzielten Effekte ergänzend auf die vorstehenden Erläuterungen verwiesen.

Es hat sich überraschend herausgestellt, dass durch das erfindungsgemäße Textilpflegeprodukt Anschmutzungen oder Wiederanschmutzungen von Textilien unterschiedlicher Art vorgebeugt werden kann oder diese effektiv verringert werden und zudem auch eine Entfernung von Anschmutzungen aus den Textilien erleichtert wird. Es wird davon ausgegangen, dass, um diese Effekte zu erzielen, das aus N-Isopropylacrylamideinheiten, N-[3-(Dimethylamino)propyl]methacrylamideinheiten und optional mindestens einem Vernetzungsmittel bestehende Copolymer auf das textile Gewebe aufzieht und eine Art Schutzschicht oder Schutzfilm ausbildet, die Anschmutzungen verhindert oder zumindest reduziert und deren Entfernen erleichtert. Die mit dem erfindungsgemäßen Textilpflegeprodukt behandelten Textilien bleiben somit länger sauber und können auch nach mehreren Wäschen ohne Spuren von vormals vorhandenen Anschmutzungen erhalten werden. Hierbei hat sich gezeigt, dass sich die Schutzschicht auf unterschiedlichen Gewebesorten ausbilden lässt, wie zum Beispiel Polyesterbasiertem Gewebe, Cellulose-basiertem Gewebe, Polyamid-basiertem Gewebe und jeglicher Art von Mischgewebe. Auch wurde gefunden, dass durch Anwendung des erfindungsgemäßen Textilpflegeprodukts unterschiedliche Arten von Anschmutzungen, also sowohl lipophile Anschmutzungen als auch hydrophile Anschmutzungen verringert oder sogar verhindert oder effektiv entfernt werden können.

Eine vorteilhafte Weiterbildung des erfindungsgemäßen Textilpflegeprodukts zeichnet sich dadurch aus, dass die Gesamtmasse an aus N-Isopropylacrylamideinheiten, N-[3-(Dimethylamino)propyl]methacrylamideinheiten und optional mindestens einem Vernetzungsmittel bestehendem Copolymer, bezogen auf die Gesamtmasse des Textilpflegeprodukts, 0,001 Masse% bis 10 Masse%, insbesondere 0,01 Masse% bis 5 Masse% und insbesondere 1 Masse% beträgt. Werden mehrere aus N-Isopropylacrylamideinheiten, N-[3-(Dimethylamino)propyl]methacrylamideinheiten und optional mindestens einem Vernetzungsmittel bestehende Copolymere in Kombination eingesetzt, so bezieht sich die Gesamtmasse auf die Gesamtmasse aller im Textilpflegeprodukt enthaltenen, aus N-Isopropylacrylamideinheiten, N-[3-(Dimethylamino)propyl]methacrylamideinheiten und optional mindestens einem Vernetzungsmittel bestehenden, Copolymere. Mit anderen Worten bedeutet dies, dass sofern beispielsweise zwei aus N-Isopropylacrylamideinheiten, N-[3-(Dimethylamino)propyl]methacrylamideinheiten und optional mindestens einem Vernetzungsmittel bestehende Copolymere in Kombination eingesetzt werden, ihre Gesamtmasse 0,001 Masse% bis 10 Masse% beträgt. Liegt in dem erfindungsgemäßen Textilpflegeprodukt nur ein Copolymer vor, das aus N-Isopropylacrylamideinheiten, N-[3-(Dimethylamino)propyl]methacrylamideinheiten und optional mindestens einem Vernetzungsmittel besteht, beträgt dessen Gesamtmasse ebenfalls vorzugsweise 0,001 Masse% bis 10 Masse% und insbesondere 0,01 Masse% bis 5 Masse%.

Bereits eine geringe Gesamtmasse des erfindungsgemäß verwendeten Copolymers von 0,001 Masse%, und insbesondere von 0,01 Masse%, bewirkt eine deutliche Verringerung von Anschmutzungen und eine Verbesserung der Entfernbarkeit von auf das textile Gewebe aufziehenden Anschmutzungen. Es kann somit davon ausgegangen werden, dass bereits eine Gesamtmasse von 0,001 Masse% des erfindungsgemäß zu verwendenden Copolymers zur Ausbildung einer das Gewebe schützenden Soil-Release Schutzschicht führt, die sich durch eine schmutzabweisende Wirkung auszeichnet. Je höher dabei der Anteil an aus N-Isopropylacrylamideinheiten, N-[3-(Dimethylamino)propyl]methacrylamideinheiten und optional mindestens einem Vernetzungsmittel bestehendem Copolymer ist, desto großflächiger und homogener wird diese Schutzschicht auf der Gewebeoberfläche ausgebildet. Anschmutzungen können somit besonders effektiv reduziert oder sogar verhindert werden, wenn die Gesamtmasse dieses Copolymers 0,01 Masse% bis 5 Masse% beträgt. Das Wirkungsspektrum ist in diesem Beriech besonders ausgewogen. Höhere Gesamtmassen von mehr als 5 Masse% oder sogar von mehr als 10 Masse% sind im Hinblick auf die Kosten des Textilpflegeprodukts nachteilig, wobei insbesondere ab einer Gesamtmasse von mehr als 10 Masse% des Copolymers keine wesentliche Steigerung der schmutzabweisenden Wirkung und auch keine weitere Verbesserung der Entfernbarkeit von Anschmutzungen bemerkbar ist. Vielmehr können bei derart hohen Gehalten an aus N-Isopropylacrylamideinheiten, N-[3-(Dimethylamino)propyl]methacrylamideinheiten und optional mindestens einem Vernetzungsmittel bestehendem Copolymer die haptischen Eigenschaften des Textils beeinträchtigt werden.

Gemäß einer vorteilhaften Weiterbildung enthält das Textilpflegeprodukt mindestens ein Tensid. Das Tensid verbessert das Entfernen von Anschmutzungen. Der Zusatz eines oder mehrerer Tenside ist insbesondere dann von Vorteil, wenn das Textilpflegeprodukt in Form eines Waschmittels, wie beispielsweise einem Vollwaschmittel, einem Feinwaschmittel oder einem Spezialwaschmittel, vorliegt.

Ein Tensid im Sinne der vorliegenden Erfindung ist eine oberflächenaktive Substanz, die durch Micellenbildung in der Lage ist, Schmutzpartikel während eines Waschvorganges mit dem Textilpflegeprodukt aus dem Textil oder den Textilien zu lösen. Geeignete Tenside umfassen kationische, anionische, nichtionische und amphotere Tenside. Auch beliebige Mischungen von zwei oder mehreren Tensiden können je nach gewünschter Waschleistung eingesetzt werden.

Geeignete anionische Tenside umfassen, ohne darauf beschränkt zu sein, Alkylbenzolsulfonate, Olefinsulfonate, Alkansulfonate, Fettalkoholsulfate, Fettalkoholethersulfate oder eine Mischung aus zwei oder mehr dieser anionischen Tenside. Von diesen anionischen Tensiden sind Alkylbenzolsulfonate, Fettalkoholethersulfate und Mischungen daraus besonders bevorzugt.

Als Tenside vom Sulfonat-Typ kommen dabei vorzugsweise Alkylbenzolsulfonate, Olefinsulfonate, das heißt Gemische aus Alken- und Hydroxyalkansulfonaten sowie Disulfonaten, wie man sie beispielsweise aus C₁₂₋₁₈-Monoolefinen mit end- oder innenständiger Doppelbindung durch Sulfonieren mit gasförmigem Schwefeltrioxid und anschließende alkalische oder saure Hydrolyse der Sulfonierungsprodukte erhält, in Betracht. Geeignet sind auch C₁₂₋₁₈-Alkansulfonate und die Ester von α-Sulfofettsäuren (Estersulfonate), zum Beispiel die α-sulfonierten Methylester der hydrierten Kokos-, Palmkern- oder Talgfettsäuren.

Alkylbenzolsulfonate sind vorzugsweise ausgewählt aus linearen oder verzweigten Mono- und Dialkylbenzolsulfonaten. Die Alkylreste können einzeln oder zusammen 9 bis 19, vorzugsweise 9 bis 15, und insbesondere 9 bis 13 C-Atome enthalten. Ein ganz besonders bevorzugter Vertreter ist Natriumdodecylbenzylsulfonat.

Als Alk(en)ylsulfate werden die Salze der Schwefelsäurehalbester der C₁₂-C₁₈-Fettalkohole, beispielsweise aus Kokosfettalkohol, Talgfettalkohol, Lauryl-, Myristyl-, Cetyl- oder Stearylalkohol oder der C₁₀-C₂₀-Oxo-Alkohole und diejenigen Halbester sekundärer Alkohole dieser Kettenlängen bevorzugt. Aus waschtechnischem Interesse sind die C₁₂-C₁₆-Alkylsulfate und C₁₂-C₁₅-Alkylsulfate sowie C₁₄-C₁₅-Alkylsulfate bevorzugt.

Auch Alkylethersulfate mit der Formel

R¹-O-(AO)n-SO₃⁻X⁺

sind geeignet. In dieser Formel steht R¹ für einen linearen oder verzweigten, substituierten oder unsubstituierten Alkylrest, vorzugsweise für einen linearen, unsubstituierten Alkylrest, besonders bevorzugt für einen Fettalkoholrest. Bevorzugte Reste R¹ sind ausgewählt aus Decyl-, Undecyl-, Dodecyl-, Tridecyl-, Tetradecyl-, Pentadecyl-, Hexadecyl-, Heptadecyl-, Oktadecyl-, Nonadecyl- und Eicosyl-Resten sowie deren Mischungen, wobei die Vertreter mit gerader Anzahl an C-Atomen bevorzugt sind. Besonders bevorzugte Reste R¹ sind abgeleitet von C₁₂-C₁₈-Fettalkoholen, beispielsweise von Kokosfettalkohol, Talgfettalkohol, Lauryl-, Myristyl-, Cetyl- oder Stearylalkohol oder von C₁₀-C₂₀-Oxoalkoholen.

AO steht für eine Ethylenoxid- (EO) oder Propylenoxid- (PO) Gruppierung, vorzugsweise für eine Ethylenoxid-Gruppierung. Der Index n steht für eine ganze Zahl von 1 bis 50, vorzugsweise von 1 bis 20, und insbesondere von 2 bis 10. Ganz besonders bevorzugt steht n für die Zahlen 2, 3, 4, 5, 6, 7 oder 8. X steht für ein einwertiges Kation oder den n-ten Teil eines n-wertigen Kations, bevorzugt sind dabei die Alkalimetallionen und darunter Na⁺ oder K⁺, wobei Na⁺ äußerst bevorzugt ist. Weitere Kationen X⁺ können ausgewählt sein aus NH4⁺, ½ Zn²⁺, ½ Mg²⁺, ½ Ca²⁺, ½ Mn²⁺ und deren Mischungen.

Die anionischen Tenside können in Form ihrer Natrium-, Kalium- oder Magnesium- oder Ammoniumsalze vorliegen. Vorzugsweise liegen die anionischen Tenside in Form ihrer Natriumsalze und/oder Ammoniumsalze vor. Zur Neutralisation einsetzbare Amine sind vorzugsweise Cholin, Triethylamin, Monoethanolamin, Diethanolamin, Triethanolamin, Metyhlethylamin oder eine Mischung daraus, wobei Monoethanolamin bevorzugt ist.

Geeignete nicht-ionische Tenside umfassen alkoxylierte Fettalkohole, alkoxylierte Oxo-Alkohole, alkoxylierte Fettsäurealkylester, Fettsäureamide, alkoxylierte Fettsäureamide, Polyhydroxyfettsäureamide, Alkylphenolpolyglykolether, Aminoxide, Alkyl(poly)glukoside und Mischungen daraus.

Bevorzugte Textilpflegeprodukte enthalten mindestens ein Fettalkoholalkoxylat der Formel

R²-O-(AO)m-H

in der
- R²: für einen linearen oder verzweigten, substituierten oder unsubstituierten Alkylrest,
- AO: für eine Ethylenoxid-(EO) oder Propylenoxid-(PO)-Gruppierung,
- m: für ganze Zahlen von 1 bis 50 stehen.

In der vorstehend genannten Formel steht R² für einen linearen oder verzweigten, substituierten oder unsubstituierten Alkylrest, vorzugsweise für einen linearen, unsubstituierten Alkylrest, besonders bevorzugt für einen Fettalkoholrest. Bevorzugte Reste R² sind ausgewählt aus Decyl-, Undecyl-, Dodecyl-, Tridecyl-, Tetradecyl-, Pentadecyl-, Hexadecyl-, Heptadecyl-, Oktadecyl-, Nonadecyl- und Eicosylresten sowie deren Mischungen, wobei die Vertreter mit gerader Anzahl an C-Atomen bevorzugt sind. Besonders bevorzugte Reste R² sind abgeleitet von C₁₂-C₁₈-Fettalkoholen, beispielsweise von Kokosfettalkohol, Talgfettalkohol, Lauryl-, Myristyl-, Cetyl- oder Stearylalkohol oder von C₁₀-C₂₀-Oxo-Alkoholen.

AO steht für eine Ethylenoxid- (EO)- oder Propylenoxid- (PO)-Gruppierung, vorzugsweise für eine Ethylenoxid-Gruppierung. Der Index m steht für eine ganze Zahl von 1 bis 50, vorzugsweise von 1 bis 20, und insbesondere von 2 bis 10. Ganz besonders bevorzugt steht m für die Zahlen 2, 3, 4, 5, 6, 7 oder 8.

Gemäß einer weiteren vorteilhaften Weiterbildung ist, um eine besonders gute Waschleistung mit hoher Schmutzablösekraft zu erhalten, vorgesehen, dass die Gesamtmasse an Tensid, also die Gesamtmasse an einem oder mehreren Tensiden, bezogen auf die Gesamtmasse des Textilpflegeprodukts, 1 Masse% bis 50 Masse% und insbesondere 3 Masse% bis 20 Masse% beträgt.

Bei der Verwendung einer Kombination aus zwei oder mehreren Tensiden bezieht sich die Gesamtmasse an Tensid auf die Gesamtmasse aller eingesetzten Tenside.

Weiter vorzugsweise liegt das Textilpflegeprodukt pulverförmig, flüssig, gelförmig, in Form von Tabs oder Kapseln vor. Hierbei ist die flüssige Form besonders bevorzugt, da in flüssigen Textilpflegeprodukten das aus N-Isopropylacrylamideinheiten, N-[3-(Dimethylamino)propyl]methacrylamideinheiten und optional mindestens einem Vernetzungsmittel bestehende Copolymer hydratisiert und damit insbesondere in Form eines Hydrogels vorliegt, das besonders leicht auf Textilien aufziehen und eine schmutzabweisende Schutzschicht bilden kann.

Das Textilpflegeprodukt kann weitere übliche Inhaltsstoffe enthalten. Alle im Zusammenhang mit den hierin beschriebenen Inhaltsstoffen des Textilpflegeprodukts angegebenen Mengenangaben beziehen sich, sofern nichts anderes angegeben ist, auf Masse%, jeweils bezogen auf die Gesamtmasse des Textilpflegeprodukts.

Des Weiteren beziehen sich derartige Mengenangaben, die sich auf mindestens einen Inhaltsstoff beziehen, immer auf die Gesamtmenge dieser Art von Inhaltsstoff, die im Textilpflegeprodukt enthalten ist, sofern nicht explizit etwas anderes angegeben ist. Das heißt, dass sich derartige Mengenangaben, beispielsweise im Zusammenhang mit "mindestens einer oberflächenaktiven Substanz", auf die Gesamtmenge von oberflächenaktiven Substanzen die im Textilpflegeprodukt enthalten sind, beziehen.

"Mindestens ein", wie hierin verwendet, bezieht sich auf 1 oder mehr, beispielsweise 1, 2, 3, 4, 5, 6, 7, 8, 9 oder mehr. Im Zusammenhang mit Inhaltsstoffen des hierin beschriebenen Textilpflegeprodukt s bezieht sich diese Angabe nicht auf die absolute Menge an Molekülen, sondern auf die Art des Bestandteils. "Mindestens ein Enzym" oder "mindestens eine oberflächenaktive Substanz" bedeutet daher beispielsweise ein oder mehrere verschiedene Enzyme oder oberflächenaktive Substanzen, d.h. eine oder mehrere verschiedene Arten von Enzymen oder oberflächenaktiven Substanzen. Zusammen mit Mengenangaben beziehen sich die Mengenangaben auf die Gesamtmenge der entsprechend bezeichneten Art von Bestandteil, wie bereits oben definiert.

Zusätzlich kann das erfindungsgemäße Textilpflegeprodukt auch weitere Inhaltsstoffe enthalten, die die anwendungstechnischen und/oder ästhetischen Eigenschaften des Textilpflegeprodukt s weiter verbessern. Im Rahmen der vorliegenden Erfindung enthält das Textilpflegeprodukt vorzugsweise zusätzlich einen oder mehrere Stoffe aus der Gruppe der Bleichmittel, Enzyme, Komplexbildner, Gerüststoffe, Elektrolyte, nicht-wässrigen Lösungsmittel, pH-Stellmittel, Parfüme, Parfümträger, Fluoreszenzmittel, Farbstoffe, Hydrotrope, Schauminhibitoren, Silikonöle, Antiredepositionsmittel, Vergrauungsinhibitoren, Einlaufverhinderer, Knitterschutzmittel, Farbübertragungsinhibitoren, antimikrobielle Wirkstoffe, Germizide, Fungizide, Antioxidantien, Konservierungsmittel, Korrosionsinhibitoren, Antistatika, Bittermittel, Bügelhilfsmittel, Phobier- und Imprägniermittel, Quell- und Schiebefestmittel, weichmachende Komponenten sowie UV-Absorber.

Als Bleichmittel können alle Stoffe dienen, die durch Oxidation, Reduktion oder Adsorption Farbstoffe zerstören oder aufnehmen und dadurch Materialien entfärben. Dazu gehören u.a. hypohalogenithaltige Bleichmittel, Wasserstoffperoxid, Perborat, Percarbonat, Peroxoessigsäure, Diperoxoazelainsäure, Diperoxododecandisäure und oxidative Enzymsysteme.

Als Gerüststoffe, die in dem Textilpflegeprodukt enthalten sein können, sind insbesondere Silikate, Aluminiumsilikate (insbesondere Zeolithe), Carbonate, Salze organischer Di- und Polycarbonsäuren sowie Mischungen dieser Stoffe zu nennen.

Organische Gerüststoffe, welche in dem Textilpflegeprodukt vorhanden sein können, sind beispielsweise die in Form ihrer Natriumsalze einsetzbaren Polycarbonsäuren, wobei unter Polycarbonsäuren solche Carbonsäuren verstanden werden, die mehr als eine Säurefunktion tragen. Beispielsweise sind diese Citronensäure, Adipinsäure, Bernsteinsäure, Glutarsäure, Äpfelsäure, Weinsäure, Maleinsäure, Fumarsäure, Zuckersäuren, Aminocarbonsäuren sowie Mischungen aus diesen. Bevorzugte Salze sind die Salze der Polycarbonsäure, die Citronensäure, Adipinsäure, Bernsteinsäure, Glutarsäure, Weinsäure, Zuckersäuren und Mischungen aus diesen.

Als Gerüststoffe sind weiter polymere Polycarboxylate geeignet. Dies sind beispielsweise die Alkalimetallsalze der Polyacrylsäure oder der Polymethacrylsäure, zum Beispiel solche mit einer relativen Molekülmasse von 600 bis 750.000 g/mol.

Geeignete Polymere sind insbesondere Polyacrylate, die bevorzugt eine Molekülmasse von 1.000 bis 15.000 g/mol aufweisen. Aufgrund ihrer überlegenen Löslichkeit können aus dieser Gruppe wiederum die kurzkettigen Polyacrylate, die Molmassen von 1.000 bis 10.000 g/mol und besonders bevorzugt von 1.000 bis 5.000 g/mol aufweisen, bevorzugt sein.

Geeignet sind weiterhin copolymere Polycarboxylate, insbesondere solche der Acrylsäure mit Methacrylsäure und der Acrylsäure oder Methacrylsäure mit Maleinsäure. Zur Verbesserung der Wasserlöslichkeit können die Polymere auch Allylsulfonsäuren, wie Allyloxybenzolsulfonsäure und Methallylsulfonsäure, als Monomer enthalten.

In flüssigen Textilpflegeprodukten werden bevorzugt lösliche Gerüststoffe, wie beispielsweise Citronensäure, oder Acrylpolymere mit einer Molmasse von 1.000 bis 5.000 g/mol eingesetzt.

Flüssige Textilpflegeprodukte enthalten weiter vorzugsweise Wasser als Hauptlösungsmittel. Dabei ist es bevorzugt, dass das Textilpflegeprodukt mehr als 5 Masse%, bevorzugt mehr als 15 Masse% und insbesondere bevorzugt mehr als 25 Masse%, jeweils bezogen auf die Gesamtmasse an Textilpflegeprodukt, an Wasser enthält. Besonders bevorzugte flüssige Textilpflegeprodukte enthalten von 5 Masse% bis 90 Masse%, bevorzugt 10 Masse% bis 85 Masse%, besonders bevorzugt 25 Masse% bis 75 Masse% und insbesondere bevorzugt 35 Masse% bis 65 Masse% Wasser.

Alternativ kann es sich bei dem erfindungsgemäßen Textilpflegeprodukt um ein wasserarmes bis wasserfreies Textilpflegeprodukt handeln, wobei die Gesamtmasse an Wasser in einer bevorzugten Ausführungsform weniger als 10 Masse% und mehr bevorzugt weniger als 8 Masse%, jeweils bezogen auf die Gesamtmasse des Textilpflegeprodukts, beträgt.

Daneben können dem Textilpflegeprodukt nicht-wässrige Lösungsmittel zugesetzt werden. Geeignete nicht-wässrige Lösungsmittel umfassen ein- oder mehrwertige Alkohole, Alkanolamine oder Glykolether, sofern sie im angegebenen Konzentrationsbereich mit Wasser mischbar sind. Vorzugsweise werden die Lösungsmittel ausgewählt aus Ethanol, n-Propanol, i-Propanol, Butanolen, Glykol, Propandiol, Butandiol, Methylpropandiol, Glycerin, Diglykol, Propyldiglykol, Butyldiglykol, Hexylenglykol, Ethylenglykolmethylether, Ethylenglykolethylether, Ethylenglykolpropylether, Ethylenglykolmono-n-butylether, Diethylenglykolmethylether, Diethylenglykolethylether, Propylenglykolmethylether, Propylenglykolethylether, Propylenglykolpropylether, Dipropylenglykolmonomethylether, Dipropylenglykolmonoethylether, Methoxytriglykol, Ethoxytriglykol, Butoxytriglykol, 1-Butoxyethoxy-2-propanol, 3-Methyl-3-methoxybutanol, Propylen-glykol-t-butylether, Di-n-octylether sowie Mischungen dieser Lösungsmittel. Es ist allerdings bevorzugt, dass das Textilpflegeprodukt einen Alkohol, insbesondere Ethanol und/oder Glycerin, zwischen 0,5 und 5 Masse%, bezogen auf die Gesamtmasse des Textilpflegeprodukts, enthält.

Zu den gegebenenfalls, insbesondere in flüssigen Textilpflegeprodukten vorhandenen, üblichen Enzymstabilisatoren gehören Aminoalkohole, beispielsweise Mono-, Di-, Triethanol- und Propanolamin und deren Mischungen, niedere Carbonsäuren, Borsäure, Alkaliborate, Borsäure-Carbonsäure-Kombinationen, Borsäureester, Borsäurederivate, Calciumsalze, beispielsweise Ca-Ameisensäure-Kombination, Magnesiumsalze, und/oder schwefelhaltige Reduktionsmittel.

Als weitere oberflächenaktive Inhaltsstoffe kommen Seifen in Betracht, wobei Seifen von C₁₂-C₁₈-Fettsäuren bevorzugt sind. Sie können ebenfalls in Form ihrer Natrium-, Kalium-, Magnesium- oder Ammoniumsalze vorliegen.

Das erfindungsgemäße Textilpflegeprodukt kann ein oder mehrere Enzyme enthalten. Prinzipiell sind diesbezüglich alle im Stand der Technik für diese Zwecke etablierten Enzyme einsetzbar. Vorzugsweise handelt es sich um eines oder mehrere Enzyme, die in einem Textilpflegeprodukt eine katalytische Aktivität entfalten können, insbesondere eine Protease, Cellulase, Amylase, Lipase, Mannanase, Pektin-spaltendes Enzym, Tannase, Xylanase, Xanthanase, *β*-Glukosidase, Carrageenase, Perhydrolase, Oxidase, Oxidoreduktase sowie deren Gemische. Bevorzugte hydrolytische Enzyme umfassen insbesondere Proteasen, Amylasen, insbesondere *α*-Amylasen, Lipasen, insbesondere Pektinase, Mannanase, *β*-Glukanasen, sowie deren Gemische. Diese Enzyme sind im Prinzip natürlichen Ursprungs. Ausgehend von den natürlichen Molekülen stehen für den Einsatz in Textilpflegeprodukten verbesserte Derivate zur Verfügung, die entsprechend bevorzugt eingesetzt werden.

Ferner erfindungsgemäß wird auch ein Verfahren zur Ausrüstung von Textilien mit einer Soil-Release Schutzschicht beschrieben, das die nachfolgenden Verfahrensschritte umfasst:
a. Bereitstellen eines wie vorstehend definierten Textilpflegeprodukts und
b. In-Kontakt-Bringen eines Textils mit dem Textilpflegeprodukt.

Das Textilpflegeprodukt kann hierzu in Form einer Lösung (Waschflotte) zubereitet werden, um das Kontaktieren mit dem Textil zu erleichtern. Durch Anwendung oder Ausführung des erfindungsgemäßen Verfahrens werden die erfindungsgemäß behandelten Textilien mit einer Art schmutzabweisender Schutzschicht versehen, die Anschmutzungen effektiv reduziert oder gar verhindert und ein Entfernen von auf das Textil aufziehenden Anschmutzungen oder Wiederanschmutzungen erleichtert und damit verbessert.

Es wird angenommen, dass Anschmutzungen durch das Verfahren daran gehindert werden in die Textilien einzudringen und allenfalls an deren Oberfläche, und hier insbesondere auf der Schutzschicht oder dem Schutzfilm, verbleiben. Sie können von dort sehr leicht entfernt werden, beispielsweise indem sie mit einem Teil der Schutzschicht oder auch mit der gesamten Schutzschicht heruntergelöst, und hierbei insbesondere ausgewaschen, werden. Ein Auswaschen wird insbesondere durch die hydrophilen Anteile des Copolymers, also insbesondere die N-[3-(Dimethylamino)propyl]methacrylamideinheiten, begünstigt. Das Verfahren ist einfach und ohne hohen technischen Aufwand umsetzbar und schützt die behandelten Textilien vor Verschmutzung. Hierbei werden die vorteilhaften Effekte für unterschiedliche Textilarten (zum Beispiel Baumwolle-basierte Textilien, Polyamid-basierte Textilien, Polyester-basierte Textilien und jegliche Art von Mischgewebe) sowie für unterschiedliche Anschmutzungen (hydrophile und hydrophobe Anschmutzungen) erzielt.

Gemäß einem weiteren Aspekt der vorliegenden Erfindung wird auch die Verwendung eines wie vorstehend offenbarten Textilpflegeprodukts zur Verringerung einer Wiederanschmutzung von Textilien und zur Verbesserung des Entfernens von Anschmutzungen aus Textilien beschrieben. Diese Effekte werden durch das im erfindungsgemäßen Textilpflegeprodukt vorliegende Copolymer, das aus N-Isopropylacrylamideinheiten, N-[3-(Dimethylamino)propyl]methacrylamideinheiten und optional mindestens einem Vernetzungsmittel besteht, für unterschiedliche Textilarten (zum Beispiel Baumwolle-basierte Textilien, Polyamid-basierte Textilien, Polyester-basierte Textilien und Mischgewebe) und unterschiedliche Anschmutzungen erzielt.

### Beispiele

### Beispiel 1: Herstellung von NIPAM-co-DMAPMA

Gemäß der nachfolgenden Herstellvorschrift wurde ein Copolymer, das aus N-Isopropylacrylamideinheiten, N-[3-(Dimethylamino)propyl]methacrylamideinheiten und Vernetzungsmittel besteht, (kurz: NIPAM-co-DMAPMA Polymer) hergestellt:
Zu einer unter Stickstoffatmosphäre auf 90 °C erhitzten Lösung von 17,09 g N-Isopropylacrylamid (NIPAM) und 0,79 g N,N'-Methylenbis(acrylamid) (BIS) in 940 mL entgastem Wasser wurde unter konstantem Rühren eine Lösung von 2,80 g N-[3-(Dimethylamino)propyl]methacrylamid (DMAPMA) in 140 mL entgastem Wasser zugegeben und der pH-Wert der Mischung mit 0,1 M NaOH auf 10 eingestellt. Anschließend wurde eine Lösung von 0,36 g Cetyltrimethylammoniumchlorid (CTAB) in 100 mL entgastem Wasser zugegeben. Ferner wurde eine Lösung von 0,14 g 2,2'-Azobis(2-methylpropionamidin)-dihydrochlorid (AAPH) in 20 mL entgastem Wasser zugefügt, um die Polymerisationsreaktion zu starten. Die erhaltene Reaktionsmischung wurde unter konstantem Rühren (300 rpm) für 4 h bei 85 °C unter Stickstoffatmosphäre gehalten und anschließend unter konstantem Rühren (300 rpm) auf Raumtemperatur abgekühlt.

Das NIPAM-co-DMAPMA fiel mit 74 % Ausbeute an und wies in Wasser bei 20 °C einen hydrodynamischen Radius (Rₕ) von 146 nm auf. Das Zetapotenzial betrug in Wasser bei 20 °C 16 mV.

### Beispiel 2: Flüssiges Textilpflegeprodukt

Die folgenden Textilpflegeprodukte wurden durch Mischen der in Tabelle 1 angegebenen Bestandteile hergestellt. Die Textilpflegeprodukte V1 und V2 sind nicht erfindungsgemäße Formulierungen, die als Referenz dienen, während das Textilpflegeprodukt E1 eine erfindungsgemäße Ausführungsform darstellt, die ein Copolymer enthält, das aus N-Isopropylacrylamideinheiten, N-[3-(Dimethylamino)propyl]methacrylamideinheiten und einem Vernetzungsmittel besteht. Als Copolymer wurde das Copolymer aus Beispiel 1 verwendet.

**Tabelle 1: Zusammensetzung der Textilpflegeprodukte [Masse%]**

| | V1 | V2 | E1 |
|---|---|---|---|
| Borsäure | 1 | 1 | 1 |
| Zitronensäure | 2,2 | 2,2 | 2,2 |
| Antischaummittel | 0,03 | 0,03 | 0,03 |
| Tenside | 18 | 18 | 18 |
| Fettsäure von Palmkernöl | 2,25 | 2,25 | 2,25 |
| NaOH | 2,334 | 2,334 | 2,334 |
| Glycerin | 2,5 | 2,5 | 2,5 |
| Konservierungsmittel | 0,0 | 0,05 | 0,05 |
| Ethanol | 1,25 | 1,25 | 1,25 |
| Phosphonat DTPMP | 0,5 | 0,5 | 0,5 |
| Opt.Aufheller | 0,035 | 0,035 | 0,035 |
| Enzymmix | 0,836 | 0,836 | 0,836 |
| Parfüm | 0,741 | 0,741 | 0,741 |
| Farbstoff | 0,006 | 0,006 | 0,006 |
| Poly-NIPAM | - | 1 | - |
| NIPAM-co-DMAPMA | - | - | 1 |
| Wasser | auf 100 | | |

Der pH-Wert der Textilpflegeprodukte betrug zwischen 8,2-8,6. Die Dichte der Textilpflegeprodukte betrug bei 20 °C 1,044-1,054 g/cm³.

### Beispiel 3: Soil-Release Effekt

3,5 kg saubere Ballastwäsche (beinhaltend folgende Testtextilien: Kopfkissen, Trikot, Küchenhandtuch) wurden dreimal mit 66 mL eines der Textilpflegeprodukte (V1, V2, E1) aus Beispiel 2 in einer Miele W 918 Novotronic^{®} mit einem Waschvolumen von 17 L und einer Wasserhärte von 16° dH bei 40 °C gewaschen. Nach dem Waschvorgang wurde die Wäsche an der Luft getrocknet.

Anschließend wurden die Testtextilien mit standardisierten Anschmutzungen angeschmutzt und für 7 Tage bei Raumtemperatur aufbewahrt. Die Testtextilien wurden dann zusammen mit der restlichen Ballastwäsche erneut in einer Waschlauge, die 66 mL des gleichen Textilpflegeprodukts aus Beispiel 2 wie zuvor verwendet enthielt, unter den vorstehend beschriebenen Bedingungen gewaschen. Die verbliebene Fleckenintensität wurde mit einem DATA-COLOR-Spectra Flash SF500 Remissions-Spectrometer bestimmt.

Tabelle 3 zeigt die erhaltenen Testergebnisse der Fleckenintensität

**Tabelle 3: Ergebnisse der Fleckenintensität**

| Anschmutzung | Textil | V2 | E1 |
|---|---|---|---|
| Palmfett | Baumwolle | 3,6 | 4,2 |
| Schmalz | Polyester | 1,6 | 3,7 |
| Schuhcreme schwarz | Polyester | 12,1 | 14,4 |
| Make Up | Baumwolle | 12,0 | 13,6 |

Angegeben sind delta-delta-Y-Werte im Vergleich zum Einsatz des Waschmittels V1. Bei den verwendeten Anschmutzungen zeigte das Textilpflegeprodukt E1, das ein Copolymer enthielt, das aus N-Isopropylacrylamideinheiten, N-[3-(Dimethylamino)propyl]methacrylamideinheiten und einem Vernetzungsmittel bestand, die besten Testergebnisse.

## Patentansprüche

1. Verwendung eines Copolymers bestehend aus N-Isopropylacrylamideinheiten, N-[3-(Dimethylamino)propyl]methacrylamideinheiten und optional mindestens einem Vernetzungsmittel als Soil-Release Wirkstoff in Textilpflegeprodukten für Textilien.

2. Textilpflegeprodukt enthaltend mindestens ein Copolymer bestehend aus N-Isopropylacrylamideinheiten, N-[3-(Dimethylamino)propyl]methacrylamideinheiten und optional mindestens einem Vernetzungsmittel.

3. Textilpflegeprodukt nach Anspruch 2, wobei die Gesamtmasse an aus N-Isopropylacrylamideinheiten, N-[3-(Dimethylamino)propyl]methacrylamideinheiten und optional mindestens einem Vernetzungsmittel bestehendem Copolymer, bezogen auf die Gesamtmasse des Textilpflegeprodukts, 0,001 Masse% bis 10 Masse% beträgt.

4. Textilpflegeprodukt nach Anspruch 2 oder 3, wobei die Gesamtmasse an aus N-Isopropylacrylamideinheiten, N-[3-(Dimethylamino)propyl]methacrylamideinheiten und optional mindestens einem Vernetzungsmittel bestehendem Copolymer, bezogen auf die Gesamtmasse des Textilpflegeprodukts, 0,01 Masse% bis 5 Masse% und insbesondere 1 Masse% beträgt.

5. Textilpflegeprodukt nach einem der Ansprüche 2 bis 4, wobei das Textilpflegeprodukt ferner mindestens ein Tensid enthält, wobei die Gesamtmasse an Tensid, bezogen auf die Gesamtmasse des Textilpflegeprodukts, 1 Masse% bis 50 Masse%, insbesondere 10 Masse% bis 25 Masse% beträgt.

6. Textilpflegeprodukt nach einem der Ansprüche 2 bis 5, wobei das Textilpflegeprodukt pulverförmig, flüssig, gelförmig, in Form von Tabs oder Kapseln vorliegt.

7. Textilpflegeprodukt nach einem der Ansprüche 2 bis 6, wobei das Textilpflegeprodukt in Form eines Waschhilfsmittels, eines Wäschepflegemittels, oder eines Wäschenachbehandlungsmittels vorliegt.

8. Verfahren zur Ausrüstung von Textilien mit einer Soil-Release Schutzschicht umfassend die Verfahrensschritte:
a) Bereitstellen eines Textilpflegeprodukts gemäß einem der Ansprüche 2 bis 7 und
b) In-Kontakt-Bringen eines Textils mit dem Textilpflegeprodukt.

9. Verwendung eines Textilpflegeprodukts nach einem der Ansprüche 2 bis 7 zur Verringerung einer Wiederanschmutzung von Textilien.

10. Verwendung eines Textilpflegeprodukts nach einem der Ansprüche 2 bis 7 zur Verbesserung eines Entfernens von Anschmutzungen aus Textilien.

## Claims

1. The use of a copolymer consisting of N-isopropylacrylamide units, N-[3-(dimethylamino)propyl]methacrylamide units and optionally at least one cross-linking agent as a soil-release active ingredient in textile care products for textiles.

2. A textile care product containing at least one copolymer consisting of N-isopropylacrylamide units, N-[3-(dimethylamino)propyl]methacrylamide units and optionally at least one cross-linking agent.

3. The textile care product according to claim 2, wherein the total mass of the copolymer consisting of N-isopropylacrylamide units, N-[3-(dimethylamino)propyl]methacrylamide units and optionally at least one cross-linking agent is from 0.001% by mass to 10% by mass, based on the total mass of the textile care product.

4. The textile care product according to claim 2 or 3, wherein the total mass of the copolymer consisting of N-isopropylacrylamide units, N-[3-(dimethylamino)propyl]methacrylamide units and optionally at least one cross-linking agent is from 0.01% by mass to 5% by mass, and in particular 1% by mass, based on the total mass of the textile care product.

5. The textile care product according to one of claims 2 to 4, wherein the textile care product further contains at least one surfactant, wherein the total mass of surfactant is from 1% by mass to 50% by mass, in particular from 10% by mass to 25% by mass, based on the total mass of the textile care product.

6. The textile care product according to one of claims 2 to 5, wherein the textile care product is present as a powder, liquid or gel, or in the form of tablets or capsules.

7. The textile care product according to one of claims 2 to 6, wherein the textile care product is in the form of an auxiliary detergent, a laundry care agent, or a laundry aftertreatment agent.

8. A method for finishing textiles using a soil-release protective layer, comprising the method steps of:
a) providing a textile care product according to one of claims 2 to 7, and
b) bringing a textile into contact with the textile care product.

9. The use of a textile care product according to one of claims 2 to 7 for reducing re-soiling of textiles.

10. The use of a textile care product according to one of claims 2 to 7 for improving the removal of soiling from textiles.

## Revendications

1. Utilisation d'un copolymère constitué de motifs N-isopropylacrylamide, de motifs N-[3-(diméthylamino)propyl]méthacrylamide et éventuellement d'au moins un agent de réticulation comme principe actif d'apprêt antisalissure dans des produits d'entretien textile destinés à des textiles.

2. Produit d'entretien textile contenant au moins un copolymère constitué de motifs N-isopropylacrylamide, de motifs N-[3-(diméthylamino)propyl]méthacrylamide et éventuellement d'au moins un agent de réticulation.

3. Produit d'entretien textile selon la revendication 2, dans lequel la masse totale de copolymère constitué de motifs N-isopropylacrylamide, de motifs N-[3-(diméthylamino)propyl]méthacrylamide et éventuellement d'au moins un agent de réticulation, est de 0,001 % en masse à 10 % en masse par rapport à la masse totale du produit d'entretien textile.

4. Produit d'entretien textile selon la revendication 2 ou 3, dans lequel la masse totale de copolymère constitué de motifs N-isopropylacrylamide, de motifs N-[3-(diméthylamino)propyl]méthacrylamide et éventuellement d'au moins un agent de réticulation est de 0,01 % en masse à 5 % en masse, et en particulier de 1 % en masse, par rapport à la masse totale du produit d'entretien textile.

5. Produit d'entretien textile selon l'une des revendications 2 à 4, dans lequel le produit d'entretien textile comprend en outre au moins un tensioactif, la masse totale de tensioactif étant de 1 % en masse à 50 % en masse, en particulier de 10 % en masse à 25 % en masse, par rapport à la masse totale du produit d'entretien textile.

6. Produit d'entretien textile selon l'une des revendications 2 à 5, dans lequel le produit d'entretien textile se présente sous forme de poudre, de liquide, de gel, de pastilles ou de capsules.

7. Produit d'entretien textile selon l'une des revendications 2 à 6, dans lequel le produit d'entretien textile se présente sous la forme d'un adjuvant de lavage, d'un agent d'entretien du linge ou d'un agent de post-traitement du linge.

8. Procédé d'équipement de textiles d'une couche de protection d'apprêt antisalissure comprenant les étapes de procédé de :
a) fourniture d'un produit d'entretien textile selon l'une des revendications 2 à 7, et
b) mise en contact d'un textile avec le produit d'entretien textile.

9. Utilisation d'un produit d'entretien textile selon l'une des revendications 2 à 7 pour réduire la resalissure de textiles.

10. Utilisation d'un produit d'entretien textile selon l'une des revendications 2 à 7 pour améliorer l'élimination de salissures de textiles.
